# EUROPEAN PATENT SPECIFICATION

(11) **EP 1 225 002 B1**
(45) Date of publication and mention of the grant of the patent: **29.07.2009**
(21) Application number: 02388001.6
(22) Date of filing: 11.01.2002
(51) Int. Cl.: B23P 21/00, B65G 37/02

(54) **Robot assembly comprising two coaxially arranged robots surrounded by a plurality of working stations**
Robotereinrichtung mit zwei von Arbeitsstationen umgebenen und koxial angeordneten Robotern
Dispositif robotisé comportant deux robots disposés coaxialement et entourés par plusieurs stations de travail

(30) Priority: 12.01.2001 DK 200100045
(43) Date of publication of application: 24.07.2002
(73) Proprietor: GRUNDFOS A/S, DK-8850 Bjerringbro (DK)
(72) Inventor: Edmondson, Nigel F., 8600 Silkeborg (DK)
(74) Representative: Noergaard, Tage

(56) References cited:
- EP-A- 0 424 730
- US-A- 4 783 904
- US-A- 5 709 303
- PATENT ABSTRACTS OF JAPAN vol. 008, no. 230 (M-333), 23 October 1984 (1984-10-23) -& JP 59 110523 A (MATSUSHITA DENKI SANGYO KK), 26 June 1984 (1984-06-26)

## Description

The present invention relates to a robot assembly as indicated in the introductory part of claim 1.

From JP-A-110523 a robot assembly is known. This document discloses a robot assembly for handling a part or parts, such as for assembling said parts, and comprising at least one set of two substantially coaxially arranged robots for instance stacked or arranged above one another; said robots are optionally placed on a base where a plurality of working stations is provided around the robots so as to allow a part or a plurality of parts for instance arranged on pallets to be fed to or removed from said working stations; the lower robot is a cylindrical robot adapted to move the parts, optionally the parts arranged on the pallets around between the working stations. The upper robot is an anthropomorphic robot operating simultaneously or in series with the cylindrical robot and being adapted to manipulate the parts, optionally the parts arranged on the pallets at each working station. In this robot assembly feeding parts onto, respectively removing parts from the working stations is not very easy and reliable, especially not during high speed operations and if the operations to be carried out are complicated.

The object of the invention is to provide a robot assembly of the above type in which feeding, respectively removing parts onto, respectively away from, the working stations is provided in a particularly easy and reliable way, even if difficult operations have to take place in relation to particular control tests of parts or groups of parts.

According to the invention
- the fixture plate means is an active mechanism for fixing, manipulating or testing the parts and is controlled by the robot assembly via a PLC,
- the pallets and fixture plates are retained in position on the working stations by means of guide pins, portions of the fixture plates being able to cooperate with said guide pins, and
- each working station has at least one sensor for detecting the presence or the absence of a pallet or of fixture plates.

As a result it is obtained that the robot is suitable for particularly difficult operations where a particular control test of each part or group of parts is required before the completed product leaves the robot assembly.

A relatively small auxiliary conveyor may according to the invention be mounted at the middle of a transfer device, said auxiliary conveyor being adapted to move empty pallets to and from said transfer device, whereby the moving direction of the auxiliary conveyor forms an angle, such as of for instance substantially 90° with the longitudinal direction of the transfer device. As a result, a very reliable feeding and removing of parts from the transfer device is obtained.

Moreover, a rotation device for the pallets may according to the invention be mounted on a working arm of the cylindrical robot or at or in the transfer device with the result that it is possible to ensure a particularly exact rotation of the pallets on the working stations, such as in connection with mounting operations.

According to the invention, a supervising vision system may be provided for a set of robots and be arranged very close to said robots, said vision system comprising at least one camera above each working station. As a result, a very reliable surveillance of the individual working operations on each working station is obtained, and accordingly it is ensured that the individual parts may be in correct position in any given moment.

Moreover, preferably the second feeding and/or removing device may according to the invention be obliquely arranged relative to the side surfaces of the working station or to the radially outermost end face of said working station, the longitudinal direction of the device and one of said surfaces together forming an angle which is preferably approximately 30°.

Finally, the cylindrical robot may according to the invention comprise a rail member arranged around the anthropomorphic robot, as well as a vehicle provided with a height-adjustable platform and moved on said rail member and being able to pass the working stations surrounding the anthropomorphic robot. In this manner a very dependable robot assembly is obtained.

The invention is explained in detail below with reference to the accompanying drawings, in which
Figure 1 is a diagrammatic top view of a robot assembly according to the invention,
Figure 2 is a diagrammatic view of a set of robots, where an anthropomorphic robot is arranged on top of and coaxial with a cylindrical robot,
Figure 3 is a perspective and diagrammatic view of a robot assembly comprising two sets of robots interconnected by means of a transfer device,
Figure 4 is diagrammatic view of a pallet provided with four fixture plates with associated fixture plate means,
Figure 5 is a diagrammatic and perspective view on a larger scale of a fixture plate with the associated fixture plate means,
Figure 6 is a side view of the fixture plate of Figure 5,
Figure 7 is a diagrammatic, vertical, sectional view through an embodiment of the robot assembly, where a first feeding and/or removing device is arranged outside a magazine,
Figure 8 is a diagrammatic side view of yet another embodiment of the robot assembly, where the cylindrical robot comprises a rail member extending around the anthropomorphic robot, and a vehicle moving on said rail member, and
Figure 9 is a top view of the embodiment of Figure 8.

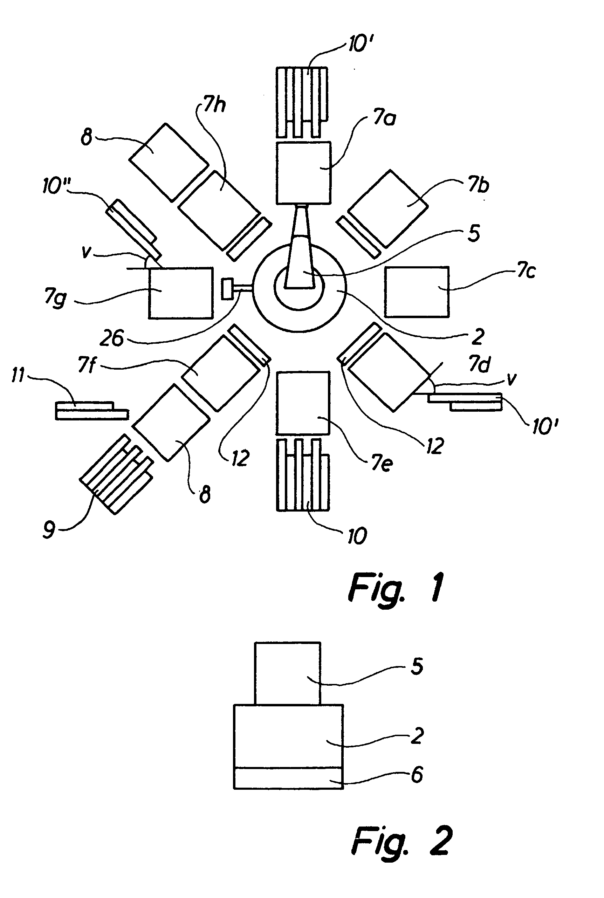

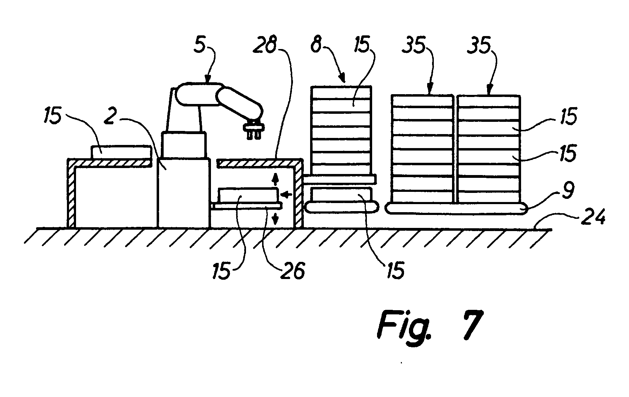

The robot assembly shown in Figure 1 is suited for handling parts, such as for assembling said parts, and comprises a set 1 of two substantially coaxially stacked robots 2 and 5 placed on a base 6. However, the base may be omitted, and then the lower robot 2 is secured directly to the floor 24 in the room in which the robot assembly is placed, cf. Figure 7. A plurality of working stations, here eight, are provided around the robots and designated 7a, 7b, 7c, 7d, 7e, 7f, 7g and 7h. A plurality of pallets 15 with or without the parts 18 to be handled can be fed to or removed from these working stations. The lower robot 2, cf. Figure 2, is a cylindrical robot adapted to move the pallets around between the working stations 7a to 7h. The upper robot 5 is an anthropomorphic robot, being guided and operating simultaneously with the cylindrical robot. It is adapted to be able to manipulate the parts at each working station, optionally on each pallet, in such a manner that from the top and downwards it grips each pallet and the parts arranged thereon or just the parts.

A magazine 8 for pallets with parts arranged thereon is associated with and arranged radially outside one or more of the working stations 7a to 7h, cf. Figure 1. The cylindrical robot 2 is adapted to be able to move the pallets out of the magazines 8 and into a working station or to move the pallets from a working station and into the magazines 8. In other words, the arms of the cylindrical robot must be extendable so as to reach out to the magazines.

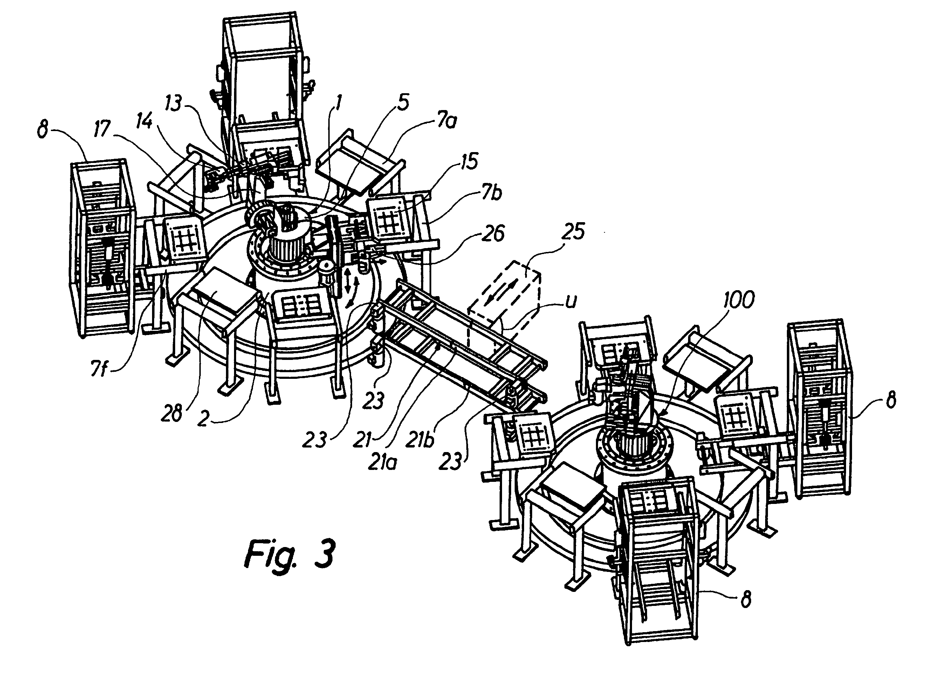

As illustrated in Figure 1, a first feeding and/or removing device 9 can be provided radially outside a working station, such as the working station 7a, or radially outside and in connection with a magazine 8. This feeding and removing device can for instance be a flexible belt feeder and can feed the pallets with parts for the magazine or the working station, but also remove pallets with parts from said magazine. As illustrated in Figure 7, the device 9 can with respect to height be arranged in the area between the floor 24 and the working table 28, cf. Figure 3, for each working station.

Figure 7 shows how the first feeding and/or removing device can feed or remove stacks 35 of pal lets 15 with parts arranged thereon.

Figure 1 shows how a second feeding and/or removing device 10' or 10, such as a flexible belt feeder, can be connected to the working stations 7a and 7e. This device is positioned on a level with the working table of the working stations, i.e. on a rather high level.

As illustrated in Figure 1, holders 12 can be mounted in the assembly, said holders housing tools to be arranged on an endeffector 14 on the working arm 17, 13 of the anthropomorphic robot. The holders 12 are mounted in the working space of the anthropomorphic robot, preferably as shown between the base 6 and each working station 7a to 7h.

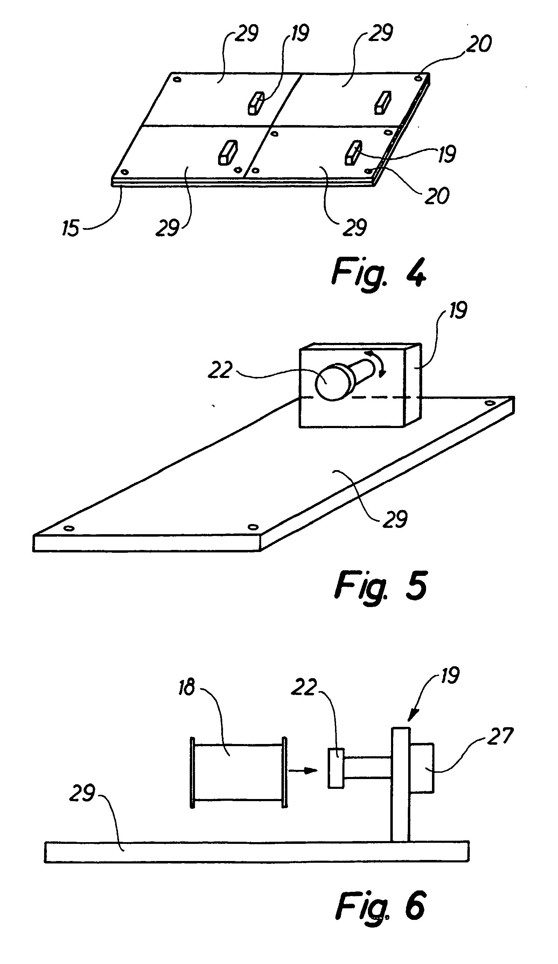

As illustrated in Figures 4, 5 and 6, each pallet 15 can be a plate of for instance aluminium. The pallet can be adapted to carry a plurality, preferably four, of fixture plates 29 with fixture plate means 16 of a hard-wearing material. For a short or long period of time, these fixture plates means can retain the parts 18, cf. Figure 6, to be processed.

Each fixture plate means 19 can be an active mechanism 22, 27 for fixing or manipulating or testing the parts. Ordinarily, the fixture plate means 19 comprises some clamping members 22, such as jaws, extendable shaft members or a magnetic two-jaw chuck, the movements of which are preferably controlled by a driving means 24 not shown in the robot assembly, optionally through a PLC.

As indicated in Figure 4, the pallets 15 and the fixture plates 29 with the fixture plate means 19 can be retained in position on the working stations 7a to 7h by means of guide pins in the corners of each working station, each pin then projecting upwards into an opening 20 in the pallet 15 and the fixture plates 29, cf. Figure 4. Each working station 7a to 7h can comprise at least one not shown sensor for detecting the presence or the absence of a pallet 15 or fixture plates 29.

Figure 3 shows how the assembly can be provided with a second set of robots 100 in addition to the first set of robots 1. Here too the lower robot is a cylindrical robot and the upper robot is an anthropomorphic robot.

A transfer device 21, such as in form of a transfer conveyor, can be provided between the two sets of robots 1 and 100, said transfer conveyor being structured to allow a transfer in two levels 21a, 21b. The transfer device is connected to the two robots at a location where a working station would ordinarily be positioned. In addition to moving pallets 15 and or fixture plates between the sets of robots 1 and 100, the transfer device serves as an inlet or outlet passage for empty pallets. At least one detecting means 23, such as a code reader, especially a bar code reader, is mounted on the transfer device, but this detecting means can also be formed by a not shown vision system for detecting each pallet. Furthermore, not shown sensors can be mounted for detecting the parts on the transfer device.

A relatively small auxiliary conveyor can be mounted at the middle of the transfer device 21, said auxiliary conveyor being adapted to move empty pallets to and from said transfer device 21. As illustrated, the moving direction of the auxiliary conveyor forms an angle u with the longitudinal direction of the transfer device. This angle u can for instance be substantially 91°.

A rotation device (not shown) for the pallets 15 can be mounted on the working arm 26 of the cylindrical robot 2 or at or in the transfer device 21, said rotation device rendering it possible to for instance rotate the pallets 180° or any other suitable angle.

When a vision system is used at each set of robots 1 or 10, this system is arranged close to the set of robots, such as just above said set of robots. The vision system is usually provided with at least one camera above each working station. However, these cameras have not been shown.

As illustrated in Figure 1, the second feeding and/or removing device 10" at the working station 7g can be obliquely arranged, i.e. form an angle v of for instance 45° with a side surface 7g' of the working station 7g. It is also possible for the second feeding and/or removing device 10' to form an angle w with the end face 7d' of the working station which is farthest away from the set of robots, where w for instance is approximately 30°, but it can also be 90° as shown.

It is possible to turn the robot assembly 180° and secure it to the ceiling of the room
in which it is to be installed. Then the anthropomorphic robot is the lower robot and the cylindrical robot is the upper robot.

It is also possible to provide a primary control system for the robots so as to control the operational activity of said robots.

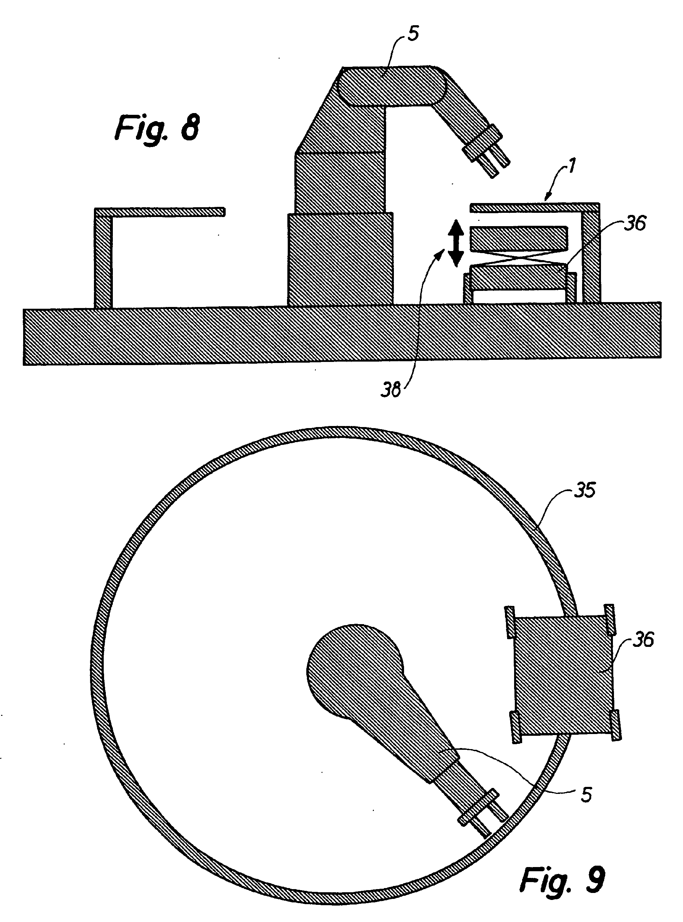

As illustrated in Figure 8, the turntable 2 can comprise a rail member 35 arranged around the anthropomorphic robot 5, as well as a vehicle 36 with an optionally height-adjustable platform 37. The vehicle moves on said rail member 35. the vehicle can pass through a number of working stations while moving on the rail member 35. Therefore it is possible to move some pallets to be processed around between the working stations by means of the vehicle 36 and to handle said parts by means of the anthropomorphic robot 6.

## Claims

1. A robot assembly for handling parts (18), such as assembling the parts, said robot assembly comprising
- at least one set (1) of two substantially coaxially arranged robots (2, 5) being arranged on a base (6), a plurality of working stations (7a to 7h) being provided around the robots so as to allow a part or a plurality of parts arranged on pallets (15) to be fed to or removed from said working stations,
- the lower robot (2) being a a cylindrical robot adapted to move the parts arranged on the pallets (15) around between the working stations (7a to 7h), while the upper robot (5) is an anthropomorphic robot operating simultaneously or in series with the cylindrical robot (2) and being adapted to be able to manipulate the parts arranged on the pallets (15) at each working station,
- at least one of the working stations (7a to 7h) being connected to a second feeding and/or removing device (10) for feeding and/or removing separate parts to/from said working station, said second feeding and/or removing device (10) being arranged on level with the working table of the working station,
- a tool holder (12) for tools for an endeffector (14) on the working arm (17, 13) of the anthropomorphic robot (5) being mounted in the working space of said anthropomorphic robot,
- each pallet (15) being adapted to be able to carry a plurality of fixture plates (29) with associated fixture plate means (19) of a hard-wearing material and for retaining the parts (18) to be processed,
**characterised in that**:
- the fixture plate means (19) is an active mechanism (22, 27) for fixing, manipulating or testing the parts (18) and is controlled by the robot assembly through a PLC,
- the pallets (15) and the fixture plates (29) arc retained in position on the working stations (7a to 7h) by means of guide pins, portions (20) of the fixture plates being able to co-operate with said guide pins, and that
- each working station (7a to 7h) has at least one sensor for detecting the presence or the absence of a pallet (15) or of fixture plates (29).

2. A robot assembly as claimed in claim 1, **characterised in that** a relatively small auxiliary conveyor (25) is mounted at the middle of a transfer device, said auxiliary conveyor(25) being adapted to move empty pallets (15) to and from said transfer device (21), whereby the moving direction of the auxiliary conveyor (25) forms an angle (u), such as of for instance substantially 90° with the longitudinal direction of the transfer device (21).

3. A robot assembly as claimed in one of the claims 1 or 2, **characterised in that** a rotation device for the pallets (15) is mounted on a working arm (26) of the turntable (2) or at or in the transfer device (21).

4. A robot assembly as claimed in one or more of the claims 1 to 3, **characterised in that** a supervising vision system is provided for a set of robots (1 or 100) very close to said set of robots, said vision system comprising at least one camera above each working station (7a to 7h).

5. A robot assembly as claimed in one or more of the claims 1 to 4, **characterised in that** the second feeding and/or removing device (10', 10") is obliquely arranged relative to one of the side surfaces (7g') of the working station (7a to 7h) or the radially outermost end face (7d') of said working station, the longitudinal direction of the device and one of said surfaces together forming an angle (v) which is preferably approximately 30°.

6. A robot assembly as claimed in one or more of the claims 1 to 5, **characterised in that** the cylindrical robot (2) comprises a preferably circular rail member (35) arranged around the anthropomorphic robot, as well as a vehicle (36) provided with a height-adjustable platform (37) and moved on said rail member and being able to pass the working stations surrounding the anthropomorphic robot.

## Patentansprüche

1. Roboteranordnung zum Handhaben von Teilen (18), wie zum Beispiel Zusammensetzen der Teile, wobei die Roboteranordnung umfasst
- zumindest einen Satz (1) zweier im Wesentlichen koaxial angeordneter Roboter (2, 5), die auf einer Basis (6) angeordnet sind, wobei mehrere Arbeitsstationen (7a bis 7h) so um die Roboter herum vorgesehen sind, dass ermöglicht wird, dass ein Teil oder auf Paletten (15) angeordnete mehrere Teile den Arbeitsstationen zugeführt oder von diesen entfernt wird/werden,
- wobei der untere Roboter (2) ein zylindrischer Roboter ist, der geeignet ist, die auf den Paletten (15) angeordneten Teile zwischen den Arbeitsstationen (7a bis 7h) umherzubewegen, während der obere Roboter (5) ein anthropomorpher Roboter ist, der gleichzeitig oder in Aufeinanderfolge mit dem zylindrischen Roboter (2) in Getrieb ist und geeignet ist, die auf den Paletten (15) angeordneten Teile an jeder Arbeitsstation manipulieren zu können,
- wobei zumindest eine der Arbeitsstationen (7a bis 7h) mit einer zweiten Zuführ- und/oder Entferneinrichtung (10) zum Zuführen und/oder Entfernen getrennter Teile zu/von der Arbeitsstation verbunden ist und die zweite Zuführ- und/oder Entferneinrichtung (10) auf gleicher Höhe mit dem Arbeitstisch der Arbeitsstation angeordnet ist,
- einen Werkzeughalter (12) für Werkzeuge für einen Endeffektor (14) an dem Arbeitsarm (17, 13) des anthropomorphen Roboters (5), der in dem Arbeitsraum des anthropomorphen Roboters angebracht ist,
- wobei jede Palette (15) geeignet ist, mehrere Befestigungsplatten (29) mit dazu gehörigen Befestigungsplattenmitteln (19) aus einem widerstandsfähigen Material und zum Halten der zu bearbeitenden Teile (18) tragen zu können,
**dadurch gekennzeichnet, dass**:
- das Befestigungsplattenmittel (19) ein aktiver Mechanismus (22, 27) zum Befestigen, Manipulieren oder Prüfen der Teile (18) und von der Roboteranordnung durch eine PLC gesteuert ist,
- die Paletten (15) und die Befestigungsplatten (29) an den Arbeitsstationen (7a bis 7h) durch Führungsstifte in Position gehalten werden, wobei Abschnitte (20) der Befestigungsplatten mit den Führungsstiften zusammenwirken können, und dass
- jede Arbeitsstation (7a bis 7h) zumindest einen Sensor zum Erfassen des Vorhandenseins oder des Fehlens einer Palette (15) oder von Befestigungsplatten (29) aufweist.

2. Roboteranordnung nach Anspruch 1, **dadurch gekennzeichnet, dass** eine relativ kleine Zusatzfördervorrichtung (25) an der Mitte einer Überführeinrichtung angebracht ist, wobei die Zusatzfördervorrichtung (25) geeignet ist, leere Paletten (15) zu und von der Überführeinrichtung (21) zu bewegen, und die Bewegungsrichtung der Zusatzfördervorrichtung (25) einen Winkel (u) von beispielsweise im Wesentlichen 90° mit der Längsrichtung der Überführeinrichtung (21) bildet.

3. Roboteranordnung nach einem der Ansprüche 1 oder 2, **dadurch gekennzeichnet, dass** eine Dreheinrichtung für die Paletten (15) an einem Arbeitsarm (26) des Drehtischs (2) oder an oder in der Überführeinrichtung (21) angebracht ist.

4. Roboteranordnung nach einem der Ansprüche 1 bis 3, **dadurch gekennzeichnet, dass** ein überwachendes Sichtsystem für einen Satz Roboter (1 oder 100) sehr nahe zu dem Satz Roboter vorgesehen ist, wobei das Sichtsystem zumindest eine Kamera oberhalb jeder Arbeitsstation (7a bis 7h) umfasst.

5. Roboteranordnung nach einem der Ansprüche 1 bis 4, **dadurch gekennzeichnet, dass** die zweite Zuführ- und/oder Entferneinrichtung (10', 10") relativ zu einer der Seitenoberflächen (7g') der Arbeitsstation (7a bis 7h) oder der radial äußersten Endfläche (7d') der Arbeitsstation schräg angeordnet ist, wobei die Längsrichtung der Einrichtung und eine der Oberflächen zusammen einen Winkel (v) bilden, der vorzugsweise annähernd 30° beträgt.

6. Roboteranordnung nach einem der Ansprüche 1 bis 5, **dadurch gekennzeichnet, dass** der zylindrische Roboter (2) ein vorzugsweise kreisförmiges Schienenelement (35), das um den anthropomorphen Roboter herum angeordnet ist, sowie ein Vehikel (36) umfasst, das mit einer höhenverstellbaren Plattform (37) versehen ist und auf dem Schienenelement bewegt wird und an den den anthropomorphen Roboter umgebenden Arbeitsstationen vorbeilaufen kann.

## Revendications

1. Ensemble robotisé pour manipuler des pièces (18), comme pour assembler les pièces, ledit ensemble robotisé comprenant
- au moins un groupe (1) de deux robots agencés sensiblement coaxialement (2, 5) qui sont agencés sur une base (6), une pluralité de stations de travail (7a à 7h) étant prévues autour des robots de manière à permettre d'amener une pièce ou une pluralité de pièces agencées sur des palettes (15) auxdites stations de travail ou de les enlever de celles-ci,
- le robot inférieur (2) étant un robot cylindrique adapté à déplacer les pièces agencées sur les palettes (15) sur le pourtour entre les stations de travail (7a à 7h), tandis que le robot supérieur (5) est un robot anthropomorphique fonctionnant simultanément ou en série avec le robot cylindrique (2) et étant adapté à manipuler les pièces agencées sur les palettes (15) à chaque station de travail,
- au moins une des stations de travail (7a à 7h) étant connectée à un second dispositif d'alimentation et/ou d'enlèvement (10) pour alimenter et/ou enlever des pièces séparées vers ladite station de travail ou depuis celle-ci, ledit second dispositif d'alimentation et/ou d'enlèvement (10). étant agencé à niveau avec la table de travail de la station de travail,
- un porte-outils (12) pour des outils destinés à un actionneur terminal (14) sur le bras de travail (17, 13) du robot anthropomorphique (5) étant monté dans l'espace de travail dudit robot anthropomorphique,
- chaque palette (15) étant adaptée à porter une pluralité de plaques de montage (29) avec des moyens formant plaque de montage associés (19) en un matériau résistant à l'usure et destinées à retenir les pièces (18) à traiter,
**caractérisé en ce que**
- les moyens formant plaque de montage (19) constituent un mécanisme actif (22, 27) pour fixer, manipuler ou tester les pièces (18) et sont commandés par l'ensemble robotisé via un contrôleur logique programmable (PLC),
- les palettes (15) et les plaques de montage (29) sont retenues en position sur les stations de travail (7a à 7h) au moyen de broches de guidage, des portions (20) des plaques de montage étant capables de coopérer avec lesdites broches de guidage, et **en ce que**
- chaque station de travail (7a à 7h) comprend au moins un capteur pour détecter la présence ou l'absence d'une palette (15) ou de plaques de montage (29).

2. Ensemble robotisé selon la revendication 1, **caractérisé en ce qu'**un convoyeur auxiliaire (25) relativement petit est monté au milieu d'un dispositif de transfert, ledit convoyeur auxiliaire (25) étant adapté à déplacer des palettes vides (15) vers et depuis ledit dispositif de transfert (21), de sorte que la direction de mouvement du convoyeur auxiliaire (25) forme un angle (u), comme par exemple sensiblement égal à 90°, avec la direction longitudinale du dispositif de transfert (21).

3. Ensemble robotisé selon l'une des revendications 1 ou 2, **caractérisé en ce qu'**un dispositif de rotation pour les palettes (15) est monté sur un bras de travail (26) de la table tournante (2), ou encore sur ou dans le dispositif de transfert (21).

4. Ensemble robotisé selon l'une ou plusieurs des revendications 1 à 3, **caractérisé en ce qu'**un système visuel de supervision est prévu pour un groupe de robots (1 ou 100) de façon très rapprochée dudit groupe de robots, ledit système visuel comprenant au moins une caméra au-dessus de chaque station de travail (7a 7h).

5. Ensemble robotisé selon l'une ou plusieurs des revendications 1 à 4, **caractérisé en ce que** le second dispositif d'alimentation et/ou d'enlèvement (10', 10") est agencé en oblique par rapport à l'une des surfaces latérales (7g') de la station de travail (7a à 7h) ou la face terminale radialement la plus à l'extérieur (7d') de ladite station de travail, la direction longitudinale du dispositif et l'une desdites surfaces formant ensemble un angle (v) qui est de préférence approximativement 30°.

6. Ensemble robotisé selon l'une ou plusieurs des revendications 1 à 5, **caractérisé en ce que** le robot cylindrique (2) comprend un élément formant rail (35) de préférence circulaire, agencé autour du robot anthropomorphique, ainsi qu'un véhicule (36) doté d'une plate-forme (37) ajustable en hauteur et déplacé sur ledit élément formant rail et étant capable de passer par les stations de travail qui entourent le robot anthropomorphique.
